# FASCICULE DE BREVET EUROPEEN

(11) **EP 1 951 570 B1**
(45) Date de publication et mention de la délivrance du brevet: **25.04.2018**
(21) Numéro de dépôt: 06819478.6
(22) Date de dépôt: 14.11.2006
(51) Int. Cl.: B64C 25/14, B64C 25/18

(54) **ATTERRISSEUR D'AERONEF COMPRENANT UN DISPOSITIF DE MANOEUVRE A CONTREFICHE ET AERONEF LE COMPRENANT**
EINE BETÄTIGUNGSSTREBENVORRICHTUNG UMFASSENDES FLUGZEUGFAHRWERK UND DAMIT VERSEHENES FLUGZEUG
AIRCRAFT LANDING GEAR COMPRISING AN OPERATION STRUT DEVICE AND AIRCRAFT PROVIDED THEREWITH

(30) Priorité: 21.11.2005 FR 0553534
(43) Date de publication de la demande: 06.08.2008
(73) Titulaire: AIRBUS OPERATIONS (S.A.S), 31060 Toulouse (FR)
(72) Inventeur: DE RUFFRAY, Paul, F-31100 Toulouse (FR); MOREL, Rodolphe, F-31300 Toulouse (FR)
(74) Mandataire: Gicquel, Olivier Yves Gérard
(86) Numéro de dépôt international: PCT/EP2006/068463
(87) Numéro de publication internationale: WO 2007/057401

(56) Documents cités:
- FR-A- 1 234 636
- GB-A- 529 460
- GB-A- 2 344 325
- US-A- 3 335 981
- US-A- 4 228 975

## Description

La présente invention concerne un atterrisseur comprenant un dispositif de manoeuvre a contrefiche perfectionné et un aéronef le comprenant.

Différents dispositifs de manoeuvre d'atterrisseurs d'aéronefs existent pour rentrer et sortir un atterrisseur de sa case de train et, en particulier, il existe des dispositifs de manoeuvre comprenant une contrefiche télescopique comprenant un vérin articulé d'une part sur la jambe de l'atterrisseur et d'autre part sur une structure fixe de la case de train, comme dans le document US 3 335 981. Les contrefiches sont des dispositifs qui assurent le verrouillage des jambes de train d'atterrissage en position basse.

Dans le cas d'atterrisseurs équipés d'une contrefiche télescopique, celle-ci est constituée d'un vérin à grande course situé au-dessus de l'atterrisseur en position rentrée, ce qui les rend difficiles à placer dans les cases de train et impose à ces dernières des dimensions importantes notamment en hauteur pour le logement des contrefiches.

En outre, ces contrefiches disposées dans le plan de manoeuvre de la jambe de train doivent être fixées sous le plafond des cases de train qui doit pour ce faire être renforcé.

Une alternative est constituée par l'utilisation d'une contrefiche briseuse mais une telle contrefiche reste volumineuse une fois repliée lorsque l'atterrisseur est rentré dans sa case.

La présente invention propose un aéronef comportant un atterrisseur pourvu d'un dispositif de manoeuvre simple et peu encombrant et prévoit pour ce faire un atterrisseur d'aéronef comprenant une jambe, une potence définissant un axe de rotation de la jambe dans un plan de manoeuvre (P) défini par une position sortie de la jambe et une position rentrée de la jambe et un dispositif de manoeuvre de la jambe comprenant au moins une contrefiche comportant une première extrémité pourvue d'un premier moyen de liaison avec un élément de l'atterrisseur et une seconde extrémité pourvu d'un second moyen de liaison avec un élément d'une case de train recevant l'atterrisseur pour lequel ladite au moins une contrefiche s'étend hors du plan de manoeuvre de la jambe de l'atterrisseur en ce que les extrémités de la potence définissant l'axe de manoeuvre sont solidaires de premières extrémités d'un ou plusieurs vérins de manoeuvre, lesdits vérins de manoeuvre comportant une seconde extrémité reliée à un panneau latéral de ladite case de train au travers d'une fixation rotative. Avantageusement, l'atterrisseur selon l'invention comprend deux contrefiches disposées de part et d'autre du plan de manoeuvre et les seconds moyens de liaison sont solidarisés à des panneaux latéraux de la case de train ce qui permet de réaliser un atterrisseur particulièrement compact.

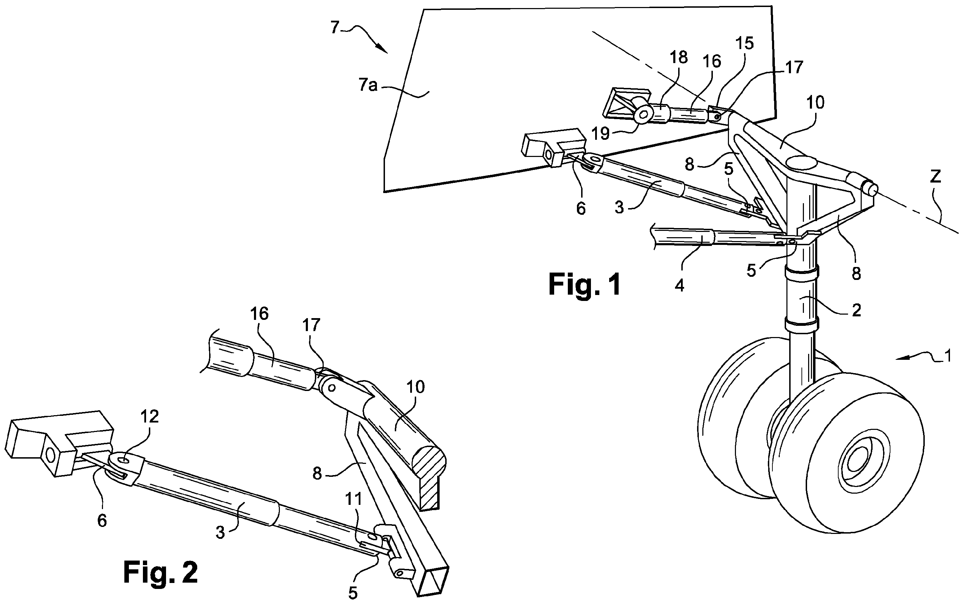

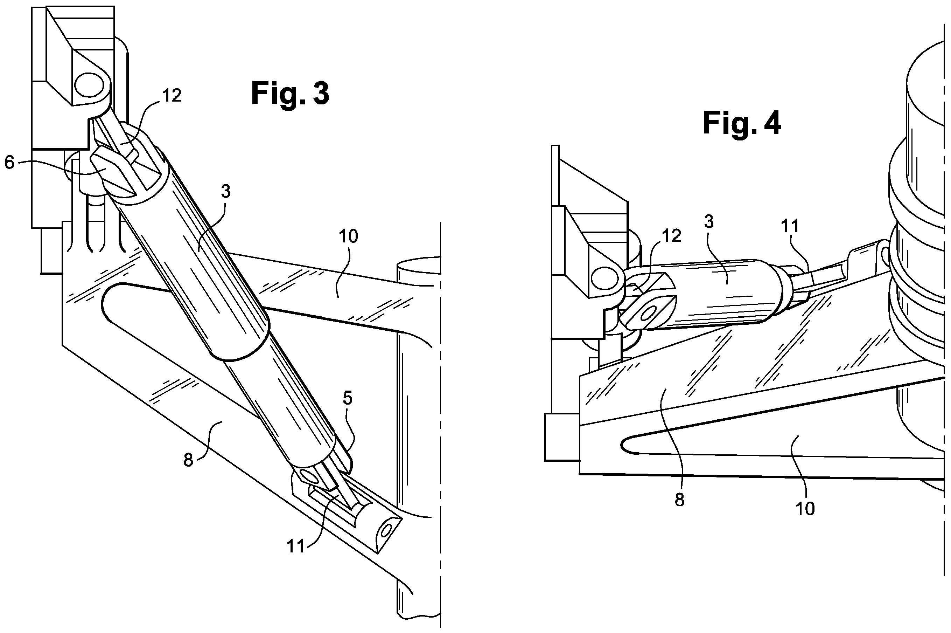

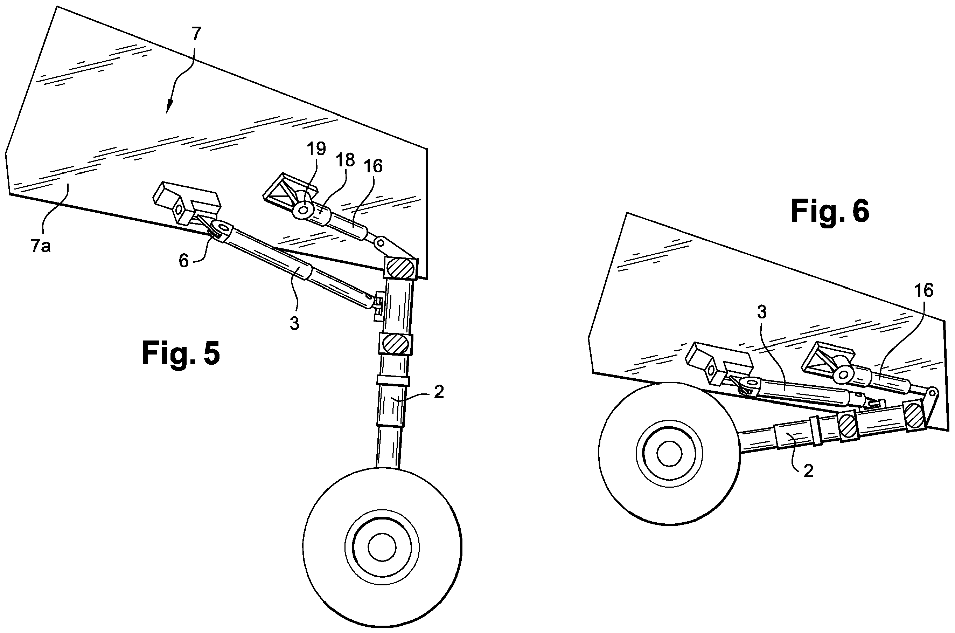

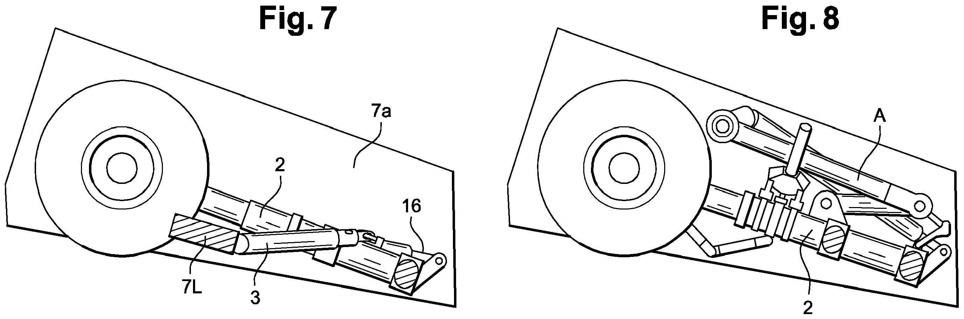

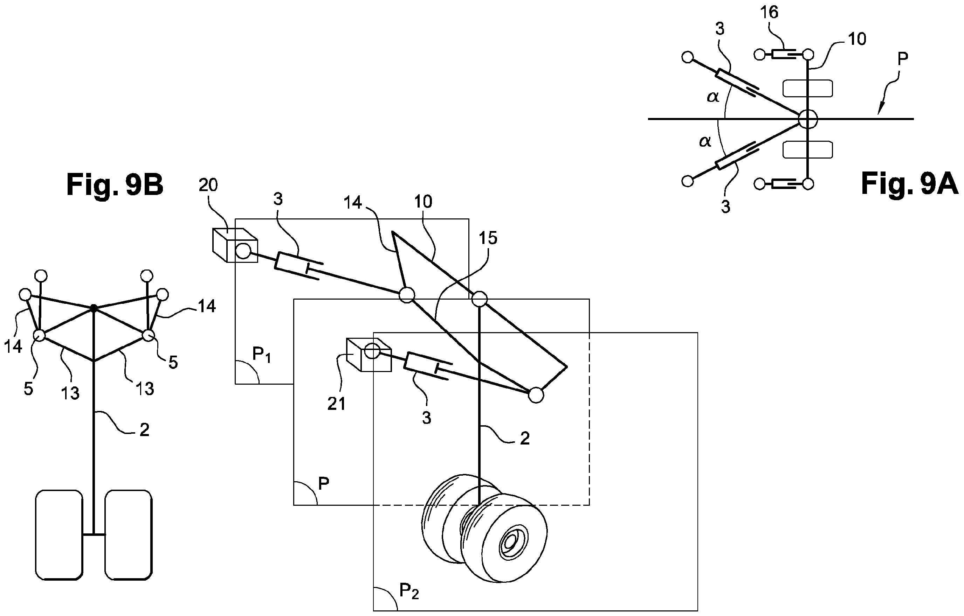

D'autres caractéristiques et avantages de l'invention seront mieux compris à la lecture de la description qui va suivre d'exemples non limitatifs de l'invention en référence aux figures qui représentent:
en figure 1: une vue en perspective d'un atterrisseur selon l'invention,
en figure 2: un détail de la figure 1,
en figure 3: une vue en perspective de face d'une partie de l'atterrisseur de la figure 1 train sorti,
en figure 4: une vue en perspective de face d'une partie de l'atterrisseur de la figure 1 train rentré,
en figure 5: une vue de côté de l'atterrisseur de la figure 1 train sorti,
en figure 6: une vue de côté de l'atterrisseur de la figure 1 train partiellement rentré,
en figure 7: l'atterrisseur de la figure 6 train totalement rentré dans la case de train,
en figure 8: une vue d'un atterrisseur de l'art antérieur train rentré,
en figure 9A: une vue schématique du dessus de l'atterrisseur de la figure 1,
en figure 9B et 9C: des vues respectivement de face et en perspective de côté d'un mode de réalisation alternatif d'un atterrisseur selon l'invention.

La figure 1 décrit de manière générale un premier exemple de réalisation d'un atterrisseur 1 d'aéronef selon l'invention.

Cet atterrisseur comprend une jambe 2 et une potence 10 disposée sur le sommet de la jambe.

La potence assure la fixation de l'atterrisseur dans la case de train et constitue un axe de rotation de la jambe dans un plan de manoeuvre (P) défini par une position sortie de la jambe 2 et une position rentrée de la jambe 2 et comprenant l'ensemble des droites définies par la jambe lors de son mouvement.

Dans le cas d'un atterrisseur traditionnel, les extrémités de la potence comportent des paliers reçus dans des logements latéraux de la case de train.

Selon la présente invention, les extrémités de la potence définissant l'axe de rotation Z sont, comme il sera vu ci-après, avantageusement solidarisées à une première extrémité 17 de vérins 16 de manoeuvre de la jambe et reliées à la potence proprement dite au travers de pattes de liaison permettant un léger déport de l'axe de rotation par rapport à un axe passant par le point de fixation de la potence sur la jambe.

La potence 10 sera comprise ci-après comme comprenant les pattes de liaison par commodité, l'axe (Z) défini par la potence passant par les axes solidarisant les vérins à la potence.

L'atterrisseur selon l'invention comprend un dispositif de manoeuvre de la jambe comprenant au moins une contrefiche 3, 4 s'étendant hors du plan de manoeuvre de la jambe de l'atterrisseur.

En figure 2, présentant un détail de la figure 1, sont représentées la contrefiche droite portée par un segment d'un bras de renfort, l'extrémité de la potence 10 et la patte de fixation de l'extrémité 17 d'un vérin 16.

La contrefiche est du type des contrefiches télescopiques.

Elle comporte une première extrémité pourvue d'un premier moyen de liaison 5 avec un élément de l'atterrisseur et une seconde extrémité pourvue d'un second moyen de liaison 6 avec un élément 7a d'une case de train recevant l'atterrisseur.

En particulier, les contrefiches selon l'invention, s'étendant hors du plan de manoeuvre de la jambe d'atterrisseur sont de longueur réduite par rapport à une contrefiche télescopique traditionnelle fixée d'une part à la jambe de train et d'autre part au plafond de la case de train et fonctionnant dans le plan de manoeuvre de l'atterrisseur.

Avantageusement, l'élément 7a sur lequel se fixe la contrefiche de droite est un panneau latéral de la case de train pourvu éventuellement d'un raidisseur ou d'un longeron reprenant les efforts de roulement transmis par la contrefiche.

De façon symétrique la contrefiche de gauche se fixe sur un panneau latéral du côté opposé du panneau 7a de la case de train.

Plus particulièrement, l'atterrisseur selon l'invention comporte donc deux contrefiches 3, 4 disposées latéralement de part et d'autre de la jambe d'atterrisseur et fixées par leurs seconds moyens de liaison sur les panneaux latéraux de la case de train correspondants.

De retour à la figure 2, les premiers moyens de liaison 5 sont disposés sur des bras de renfort inclinés 8, reliant la jambe aux extrémités de la potence 10 comprenant la liaison de la potence 10 aux vérins 16.

L'atterrisseur comprend deux contrefiches 3, 4 disposées de part et d'autre du plan de manoeuvre et chacune raccordée à un panneau latéral de la case de train de l'aéronef dans laquelle est reçu l'atterrisseur. Les seconds moyens de liaison des contrefiches sont repris sur les panneaux latéraux 7a.

Selon un premier mode de réalisation représenté à la figure 1 et schématisé à la figure 9A, les contrefiches 3, 4 sont disposées obliquement par rapport au plan P de manoeuvre de la jambe 2 de l'atterrisseur.

Dans ce cas, lors de la rentrée et de la sortie de l'atterrisseur, le mouvement de rentrée/sortie du train induit une composante de rotation et de torsion des contrefiches ce qui impose que au moins certains desdits moyens de liaison 5, 6 comportent des cardans de liaison 11, 12 pour autoriser le coulissement de la tige télescopique de la contrefiche dans son manchon.

En outre, une rotation du piston de la contrefiche dans le corps de la contrefiche doit être possible.

En particulier, le second moyen de liaison 6 comporte un cardan de liaison 11 entre la contrefiche et la case de train de l'aéronef équipé d'un atterrisseur selon l'invention.

De même, le premier moyen de liaison 5 de la contrefiche sur la jambe ou sur le bras de renfort comporte selon l'exemple un cardan de liaison.

Cette solution a pour contrainte que des efforts selon un axe transversal sont introduits dans la case de train ce qui nécessite éventuellement de reprendre les seconds points de fixation des contrefiches sur des longerons ou raidisseurs.

Selon un second mode de réalisation schématisé en figures 9B et 9C, les contrefiches s'étendent dans des plans P1, P2 sensiblement parallèles au plan P de manoeuvre de la jambe 2.

Pour ce faire, les bras de renfort inclinés reliant la jambe à des extrémités de fixation de l'axe de manoeuvre, sont pourvus de branches transversales 13 et de branches de déport 14 et les premiers moyens de liaison des contrefiches sur les bras sont disposés sur lesdites branches de déport 14.

En outre il peut aussi être prévu des plots 20, 21 dépassant des parois latérales de la case de train et s'étendant vers l'intérieur de ladite case pour conserver les contrefiches en alignement parallèle au plan P.

Cette solution permet de simplifier les moyens de fixation des contrefiches sur l'atterrisseur et sur les panneaux en évitant les cardans et en les remplaçant par des simples fixations rotatives, évite en outre d'introduire des efforts transversaux dans la case de train mais a le désavantage d'induire des moments de flexion dans les bras de renfort.

Comme il a été vu plus haut, selon l'exemple des figures 1 à 7, les extrémités de la potence 10 définissant l'axe de manoeuvre Z sont solidaires de premières extrémités 17 de vérins de manoeuvre 16.

Un seul vérin 16 est nécessaire et dans ce cas au moins une extrémités de la potence 10 définissant l'axe de rotation Z est solidarisée à une première extrémité 17 du vérin 16 de manoeuvre de la jambe.

Le ou les vérins de manoeuvre 16 comportent une seconde extrémité 18 reliée à un panneau latéral 7a de ladite case au travers d'une fixation rotative 19.

Cette disposition avantageuse permet de positionner les fixations des contrefiches au plus près de la sortie de la case de train pour réduire au maximum l'encombrement de l'atterrisseur dans l'aéronef.

Les figures 5, 6 et 7 qui illustrent la rentrée et la sortie de l'atterrisseur permettent de comprendre l'intérêt de cette solution.

L'atterrisseur sorti est représenté en figure 5, vu de côté avec une coupe d'une partie de potence et d'une partie de bras de sorte que seuls le vérin et la contrefiches disposés derrière la jambe soient visibles.

Dans cette position, la contrefiche télescopique est en extension maximale et le vérin est totalement rétracté. L'atterrisseur est sorti en position de roulage et d'atterrissage.

La figure 6 montre une position intermédiaire de l'atterrisseur pour laquelle la contrefiche est rétractée et pour laquelle le vérin est toujours comprimé, la jambe ayant par rapport à la figure 5 effectué une rotation autour de l'axe Z.

Cette position correspond en fait à la position rentrée d'un atterrisseur comprenant deux contrefiches selon l'invention mais dépourvu de vérin et pour lequel l'axe de rotation passe par les extrémités de la potence 10 les extrémités de cette dernière étant pourvue de paliers qui sont reçues dans les panneaux latéraux.

Comme visible sur cette figure 6, la jambe n'est pas totalement rentrée et la roue dépasse de la case de train du fait que la traction de la contrefiche n'est pas apte à relever entièrement la jambe de train jusqu'à lui faire dépasser un plan horizontal passant par l'axe Z.

Une telle construction est possible mais oblige à disposer l'axe de rotation de la jambe et les points de fixation assez haut dans la case de train pour que les roues de l'atterrisseur ne dépassent pas ce qui n'est pas la solution optimale recherchée par l'invention pour laquelle la jambe de train doit être disposée au plus bas dans la case de train pour libérer de l'espace dans l'aéronef au dessus de cette case de train.

Ainsi, en mode de réalisation avantageux, la potence 10 est montée sur les vérins 16, vérins de manoeuvre qui, comme représenté en figure 7, passent en extension une fois les contrefiches rétractées afin de faire pivoter encore la jambe qui bascule dans une position pour laquelle l'axe portant les roues se retrouve au dessus de l'axe Z, la jambe se trouvant alors au dessus des points de fixation des contrefiches sur les panneaux latéraux de la case de train de sorte que la position du train est similaire à la position d'un train traditionnel, par exemple un train d'atterrissage à contrefiche briseuse comme représenté en figure 8.

Ainsi, pour un aéronef équipé de l'atterrisseur selon l'invention, un ou plusieurs vérins de manoeuvre 16 assurent la rentrée et la sortie du train, les contrefiches 3, 4 assurant le verrouillage de l'atterrisseur, la rentrée du train étant en particulier commandée par le ou les vérins.

Les vérins et les contrefiches constituent des branches de parallélogrammes déformables qui sont disposés au plus près de l'entrée de la case de train, la rentrée du train dans la case de train, commandée par l'extension du ou des vérins 16 comporte une séquence d'extension desdits vérins la séquence d'extension des vérins commandant une séquence de contraction des contrefiches, la séquence d'extension se prolongeant pour permettre un basculement de la jambe au delà d'un plan horizontal dans son mouvement de rentrée.

A contrario, lors de la sortie du train, le ou les vérins se rétractent ce qui commande l'extension des contrefiches, la jambe de train tournant d'abord autour d'un axe situé entre l'axe de fixation des contrefiches sur la jambe et l'axe Z de fixation des vérins sur la potence avant de tourner autour de l'axe Z.

La position de la potence vis à vis des contrefiches est représentée de face aux figures 3 et 4 qui permettent de visualiser la rotation des fixations à cardans utilisées dans le cas des contrefiches obliques dont les points de fixation sur les bras 8 sont réalisées au plus près de la jambe de train pour minimiser les efforts de gauchissement sur les bras 8.

Ces figures 3 et 4 et la figure 7 notamment permettent de constater que l'atterrisseur muni de deux contrefiches latérales se reprenant sur les panneaux latéraux de la case de train est un atterrisseur particulièrement compact, ce en particulier grâce aux contrefiches de longueur réduite selon l'invention.

La case de train peut ainsi être réduite en hauteur, voire être constituée d'un cadre structural et d'une enveloppe réalisée au plus près du train pour dégager un espace dans l'aéronef, cet espace permettant de loger des équipements supplémentaires et pour réduire la masse de la case de train.

## Revendications

1. Aéronef comportant un atterrisseur (1) reçu dans une case de train comprenant des panneaux latéraux (7a), ledit atterrisseur (1) comprenant une jambe (2), une potence (10) définissant un axe de rotation (Z) de la jambe dans un plan de manoeuvre (P) défini par une position sortie de la jambe (2) et une position rentrée de la jambe (2) et un dispositif de manoeuvre de la jambe comprenant au moins une contrefiche (3, 4) comportant une première extrémité pourvue d'un premier moyen de liaison (5) avec un élément de l'atterrisseur et une seconde extrémité pourvu d'un second moyen de liaison (6) repris sur un panneau latéral (7a) de ladite case de train, ladite au moins une contrefiche s'étendant hors du plan de manoeuvre de la jambe de l'atterrisseur,
**caractérisé en ce que** les extrémités de la potence (10) définissant l'axe de manoeuvre (Z) sont solidaires de premières extrémités (17) d'un ou plusieurs vérins de manoeuvre (16), lesdits vérins de manoeuvre (16) comportant une seconde extrémité (18) reliée à un panneau latéral (7a) de ladite case de train au travers d'une fixation rotative (19).

2. Aéronef selon la revendication 1, **caractérisé en ce que** l'atterrisseur comprend deux contrefiches (3, 4) disposées de part et d'autre du plan de manoeuvre et dont les seconds moyens de liaison sont solidarisés aux panneaux latéraux de la case de train.

3. Aéronef selon la revendication 2, **caractérisé en ce que** les premiers moyens de liaison (5) sont disposés sur des bras de renfort inclinés (8) reliant la jambe à des extrémités de fixation de la potence (10).

4. Aéronef selon l'une quelconque des revendications 2 à 3, **caractérisé en ce que** les contrefiches (3, 4) sont disposées obliquement par rapport au plan (P) de manoeuvre de la jambe (2) de l'atterrisseur.

5. Aéronef selon l'une quelconque des revendications 2 à 4, **caractérisé en ce que** le ou les vérins de manoeuvre (16) et les contrefiches (3, 4) constituent des branches de parallélogrammes déformables et sont disposés au plus près d'une entrée de la case de train de sorte que la rentrée du train dans la case de train comporte une séquence d'extension desdits vérins la séquence d'extension des vérins commandant une séquence de contraction des contrefiches, la séquence d'extension se prolongeant pour permettre un basculement de la jambe au-delà d'un plan horizontal dans son mouvement de rentrée.

## Patentansprüche

1. Flugzeug, umfassend ein Fahrwerk (1), das in einem Fahrwerkkasten, umfassend seitliche Platten (7a), aufgenommen ist, wobei das Fahrwerk (1) ein Bein (2), einen Ausleger (10), der eine Rotationsachse (Z) des Beins in einer Betätigungsebene (P) definiert, die durch eine ausgefahrene Position des Beins (2) und eine eingezogene Position des Beins (2) definiert ist, und eine Betätigungsvorrichtung des Beins umfasst, umfassend mindestens eine Strebe (3, 4), umfassend ein erstes Ende, das mit einem ersten Mittel (5) zur Verbindung mit einem Element des Fahrwerks versehen ist, und ein zweites Ende, das mit einem zweiten Verbindungsmittel (6) versehen ist, das auf einer seitlichen Platte (7a) des Fahrwerkkastens aufgenommen ist, wobei sich die mindestens eine Strebe außerhalb der Betätigungsebene des Beins des Fahrwerks erstreckt,
**dadurch gekennzeichnet, dass** die Enden des Auslegers (10), die die Betätigungsachse (Z) definieren, mit ersten Enden (17) eines oder mehrerer Betätigungszylinder (16) verbunden sind, wobei die Betätigungszylinder (16) ein zweites Ende (18) umfassen, das mit einer seitlichen Platte (7a) des Fahrwerkkastens durch eine rotierende Befestigung (19) verbunden ist.

2. Flugzeug nach Anspruch 1, **dadurch gekennzeichnet, dass** das Fahrwerk zwei Streben (3, 4) umfasst, die beiderseits der Betätigungsebene angeordnet sind, und deren zweiten Verbindungsmittel mit den seitlichen Platten des Fahrwerkkastens verbunden sind.

3. Flugzeug nach Anspruch 2, **dadurch gekennzeichnet, dass** die ersten Verbindungsmittel (5) auf geneigten Verstärkungsarmen (8) angeordnet sind, die das Bein mit Befestigungsenden des Auslegers (10) verbinden.

4. Flugzeug nach einem der Ansprüche 2 bis 3, **dadurch gekennzeichnet, dass** die Streben (3, 4) schräg zur Betätigungsebene (P) des Beins (2) des Fahrwerks angeordnet sind.

5. Flugzeug nach einem der Ansprüche 2 bis 4, **dadurch gekennzeichnet, dass** der oder die Betätigungszylinder (16) und die Streben (3, 4) Schenkel von verformbaren Parallelogrammen darstellen und möglichst nahe zu einem Eingang des Fahrwerkkastens angeordnet sind, so dass das Einziehen des Fahrwerks in den Fahrwerkkasten eine Verlängerungssequenz der Zylinder umfasst, wobei die Verlängerungssequenz der Zylinder eine Verkürzungssequenz der Streben steuert, wobei sich die Verlängerungssequenz fortsetzt, um ein Kippen des Beins über eine Horizontalebene hinaus bei seiner Einziehbewegung zu ermöglichen.

## Claims

1. Aircraft comprising a landing gear (1) received in a landing gear bay comprising lateral panels (7a), the said landing gear (1) comprising a leg (2), a bracket (10) defining an axis of rotation (Z) of the leg in an operating plane (P) defined by an extended position of the leg (2) and a retracted position of the leg (2), and a device for operating the leg comprising at least one strut (3, 4) having a first end provided with a first connecting means (5) for connection to an element of the landing gear and a second end provided with a second connecting means (6) mounted on a lateral panel (7a) of the said landing gear bay, the said at least one strut extending outside the operating plane of the leg of the landing gear, **characterized in that** the ends of the bracket (10) defining the operating axis (Z) are secured to first ends (17) of one or more operating jacks (16), the said operating jacks (16) having a second end (18) connected to a lateral panel (7a) of the said landing gear bay via a rotatable mounting (19).

2. Aircraft according to Claim 1, **characterized in that** the landing gear comprises two struts (3, 4) which are arranged on either side of the operating plane and the second connecting means of which are secured to the lateral panels of the landing gear bay.

3. Aircraft according to Claim 2, **characterized in that** the first connecting means (5) are arranged on inclined reinforcing arms (8) connecting the leg to ends for fixing the bracket (10).

4. Aircraft according to either one of Claims 2 and 3, **characterized in that** the struts (3, 4) are arranged obliquely with respect to the operating plane (P) of the leg (2) of the landing gear.

5. Aircraft according to any one of Claims 2 to 4, **characterized in that** the operating jack(s) (16) and the struts (3, 4) constitute branches of deformable parallelograms and are arranged as close as possible to an inlet of the landing gear bay such that the retraction of the landing gear into the landing gear bay comprises a sequence of extension of the said jacks, the sequence of extension of the jacks commanding a sequence of contraction of the struts, the sequence of extension being prolonged to allow a tilting of the leg beyond a horizontal plane in its retraction movement.
